# EUROPÄISCHE PATENTSCHRIFT

(11) **EP 0 662 044 B1**
(45) Veröffentlichungstag und Bekanntmachung des Hinweises auf die Patenterteilung: **11.12.1996**
(21) Anmeldenummer: 94919548.1
(22) Anmeldetag: 13.07.1994
(51) Int. Cl.: B31F 1/24, B29C 53/30, B31D 5/04

(54) **VORRICHTUNG ZUM HERSTELLEN EINER SCHUTZAUFLAGE FÜR KLOSETTSITZE**
DEVICE FOR MANUFACTURING PROTECTIVE OVERLAYS FOR TOILET-SEATS
DISPOSITIF PERMETTANT DE PRODUIRE UN REVETEMENT DE PROTECTION POUR ABATTANT DE W.-C.

(30) Priorität: 16.07.1993 CH 2159/93
(43) Veröffentlichungstag der Anmeldung: 12.07.1995
(73) Patentinhaber: Limark AG, 3001 Bern (CH)
(72) Erfinder: SCHWEIZER, Paul, CH-8103 Unterengstringen (CH)
(74) Vertreter: Groner, Manfred
(86) Internationale Anmeldenummer: CH9400148
(87) Internationale Veröffentlichungsnummer: WO9502503

(56) Entgegenhaltungen:
- DE-B- 1 197 218
- DE-C- 214 831
- GB-A- 561 544
- GB-A- 1 125 911
- US-A- 2 347 086
- US-A- 3 397 264
- US-A- 3 438 578
- US-A- 3 669 586
- US-A- 3 908 704
- US-A- 4 201 119

## Beschreibung

Die Erfindung betrifft eine Vorrichtung zum Herstellen einer Schutzauflage für Klosettsitze. Durch die EP-B-0 331 631 ist eine Schutzauflage für Klosettsitze bekannt geworden, die eine auf die Sitzfläche eines Sitzringes aufzulegende längliche Bahn aus einer dünnen und flexiblen Folie aufweist. Die Bahn dieser Schutzauflage ist quer zu ihrer Längsrichtung mehrfach gefaltet und weist einen vorderen Rand auf, der ebenfalls quer zur Längsrichtung der Bahn gefaltet ist. Wird die gefaltete Bahn an ihren Enden gefasst und auseinandergezogen, so entfaltet sich die Bahn und kann in einfacher Weise und sicher auf einen Klosettsitz aufgebracht werden. Ein besonderer Vorteil dieser Schutzauflage besteht darin, dass sie auf vergleichsweise kleinem Raum untergebracht werden kann.

Der Erfinder hat sich nun die Aufgabe gestellt, eine Vorrichtung vorzuschlagen, mit der eine solche oder eine ähnlich gefaltete Schutzauflage hergestellt werden kann, wobei insbesondere die Faltung der Bahn selbsttätig erfolgen soll.

Die Aufgabe ist dadurch gelöst, dass die Vorrichtung einen länglichen Führungsteil mit wenigstens einer Kante aufweist, über welche eine Folie in ihrer Längsrichtung zu falten ist, dass seitlich am Führungsteil Klemmorgane angeordnet sind, mit denen die Folie auf beiden Seiten des Führungsteils fassbar und zur Bildung je eines Faltes an jeder Seite dieses Führungsteils in Längsrichtung des Führungsteils oder quer zu diesem verschiebbar ist. Die Folie ist auf dem Führungsteil in Längsrichtung verschiebbar und wird durch die Klemmorgane gefasst und verschoben. Durch wiederholtes Fassen und Verschieben durch die Klemmorgane kann die Folie über ihre gesamte Länge gefaltet werden. Es hat sich gezeigt, dass eine solche Vorrichtung mit vergleichsweise wenigen einfachen Teilen realisiert werden kann und trotzdem sehr schnell und sicher arbeitet.

Nach einer Weiterbildung der Erfindung sind zwei im Abstand zueinander angeordnete Klemmorgane vorgesehen, wobei ein frontseitig angeordnetes Klemmorgan bezüglich des Führungsteils quer zu diesem und das andere Klemmorgan quer zum Führungsteil und in Längsrichtung des Führungsteils zum anderen Klemmorgan hin bewegbar ist. Zum Bilden einer Faltung wird mit dem einen Klemmorgan die Folie am Führungsteil fixiert, während das andere Klemmorgan die Folie in einem bestimmten Abstand zum frontseitig angeordneten Klemmorgan fasst und verschiebt. Nach einer Weiterbildung der Erfindung kann hierbei eine Blasvorrichtung vorgesehen sein, die während einer Faltung zwischen den beiden Klemmorganen Luft gegen die offene Seite der Folie leitet. Durch konstruktiv einfache Massnahmen ist dadurch sichergestellt, dass sich die Folie zwischen den beiden Klemmorganen nach aussen faltet. Die Blasvorrichtung kann aber auch beispielsweise durch mechanisch einführbare Finger, Flügel oder andere geeignete Spreizteile ersetzt sein.

Der Führungsteil weist vorzugsweise zwei parallele Führungsflächen auf, an denen die Folie anliegt und an denen die Folie in Längsrichtung des Führungsteils verschiebbar ist. Nach einer Weiterbildung der Erfindung sind diese beiden Führungsflächen im Abstand zueinander angeordnet, derart, dass die gefaltete Folie quer zur Längsrichtung U-förmig ist.

Nach einer Weiterbildung der Erfindung ist ein Klemmorgan vor einer Frontseite des Führungsteils angeordnet und im Abstand zu dieser Frontseite ein weiteres Klemmorgan angeordnet, das gegen diese Frontseite bewegbar ist. Auch bei dieser Ausführung wird die Folie schrittweise auf dem Führungsteil in Längsrichtung bewegt. Die Folie ist hier jedoch im Querschnitt U-förmig über das Führungsteil gefaltet und wird mit dem einen Klemmorgan nach innen eingefaltet während das andere Klemmorgan gleichzeitig den zu faltenden Bereich der Folie gegen den Führungsteil bewegt.

Weitere Vorteile und Merkmale der Erfindung ergeben sich aus den abhängigen Patentansprüchen, der nachfolgenden Beschreibung sowie der Zeichnung. Ausführungsbeispiele der Erfindung werden nachfolgend anhand der Zeichnung näher erläutert. Es zeigen:
- Fig. 1: in perspektivischer Ansicht schematisch eine auf einem Führungsteil aufgebrachte Folie,
- Fig. 2a: in perspektivischer Ansicht schematisch eine erfindungsgemässe Vorrichtung zu Beginn einer ersten Faltung,
- Fig. 2b: eine Draufsicht auf die Vorrichtung gemäss Fig. 2a,
- Fig. 2c: eine Draufsicht auf die Vorrichtung gemäss Fig. 2b, wobei die Folie während der Bildung einer ersten Faltung gezeigt ist,
- Fig. 3a: in perspektivischer Ansicht schematisch die erfindungsgemässe Vorrichtung nach dem Herstellen einer ersten Faltung,
- Fig. 3b: in perspektivischer Ansicht schematisch ein Teil einer mit einer ersten Faltung versehenen Folie,
- Fig. 3c: eine Draufsicht auf die Vorrichtung gemäss Fig. 3a,
- Fig. 4a: in perspektivischer Ansicht schematisch die erfindungsgemasse Vorrichtung zu Beginn der Herstellung einer zweiten Faltung,
- Fig. 4b: in perspektivischer Ansicht ein Teil einer mehrfach gefalteten Folie,
- Fig. 4c: eine Draufsicht auf eine erfindungsgemässe Vorrichtung, wobei die Folie mehrfach gefaltet gezeigt ist,
- Fig. 5: in perspektivischer Ansicht schematisch eine auf ein weiteres Führungsteil aufgebrachte Folie,
- Fig. 6: in perspektivischer Ansicht schematisch eine erfindungsgemässe Vorrichtung nach einer Variante,
- Fig. 7a: die Vorrichtung gemäss Fig. 6 nach dem Herstellen einer ersten Faltung,
- Fig. 7b: perspektivisch ein Abschnitt einer einfach gefalteten Folie,
- Fig. 8a: die Vorrichtung gemäss Fig. 6, unmittelbar vor der Bildung einer zweiten Faltung einer Folie,
- Fig. 8b: in perspektivischer Ansicht ein Teil einer mehrfach gefalteten Folie,
- Fig. 9: in perspektivischer Ansicht schematisch eine erfindungsgemässe Vorrichtung nach einer weiteren Variante,
- Fig. 10a: die Vorrichtung gemäss Fig. 9 unmittelbar vor der Bildung einer ersten Faltung,
- Fig. 10b: eine Draufsicht auf die Vorrichtung gemäss Fig. 10a,
- Fig. 11a: die Vorrichtung gemäss Fig. 9 während der Bildung einer ersten Faltung,
- Fig. 11b: eine Draufsicht auf die Vorrichtung gemäss Fig. 11a
- Fig. 11c: eine Draufsicht auf die Vorrichtung gemäss Fig. 9, unmittelbar nach der Bildung einer ersten Faltung,
- Fig. 12a: eine Draufsicht auf die Vorrichtung gemäss Fig. 9, nach der Bildung einer ersten Faltung,
- Fig. 12b: eine Draufsicht auf die Vorrichtung gemäss Fig. 12a,
- Fig. 13: eine Draufsicht auf die Vorrichtung gemäss Fig. 9, in einer Stellung vor der Bildung einer zweiten Faltung,
- Fig. 14a: perspektivisch eine Ansicht einer Schutzauflage hergestellt mit der Vorrichtung gemäss den Figuren 1 bis 4,
- Fig. 14b: eine Ansicht der entfalteten Folie gemäss Fig. 14a,
- Fig. 15a: eine perspektivische Ansicht einer Folie gefaltet mit einer Vorrichtung gemäss den Figuren 5 bis 8,
- Fig. 15b: eine Ansicht einer entfalteten Folie gemäss Fig. 15a,
- Fig. 16a: eine Ansicht einer Schutzauflage hergestellt mit einer Vorrichtung gemäss den Figuren 9 bis 13, und
- Fig. 16b: eine Ansicht einer entfalteten Schutzauflage gemäss Fig. 16a.

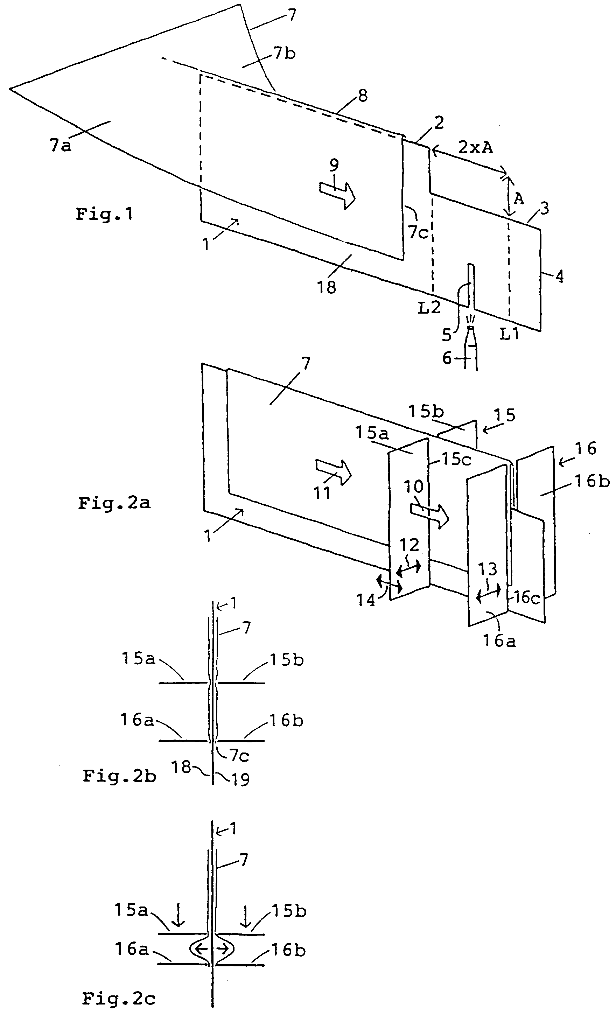

Die Fig. 1 zeigt eine Folie 7, die beispielsweise aus Papier, aus Kunststoff, Stoff oder einem Vlies besteht. Die Folie 7 ist über ein Führungsteil 1 gelegt und entlang einer oberen geraden Kante 2 mittig und in Längsrichtung gefaltet. Der in der Folie 7 gebildete erste Falz 8 erstreckt sich über die gesamte Länge der Folie 7. Das Führungsteil 1 ist beispielsweise ein vergleichsweise dünnes Blech, das auf einem hier nicht gezeigten Maschinengestell befestigt ist. Das Führungsteil 1 weist zwei parallele gegenüberliegende ebene Führungsflächen 18 und 19, zwei Ausnehmungen 3 und 5 sowie eine frontseitige Kante 4 auf.

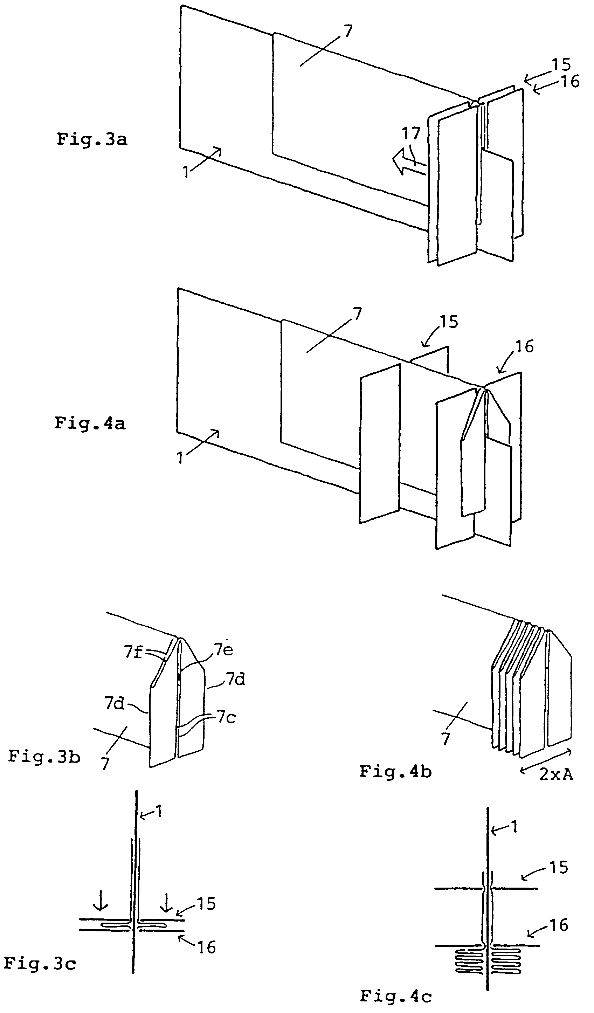

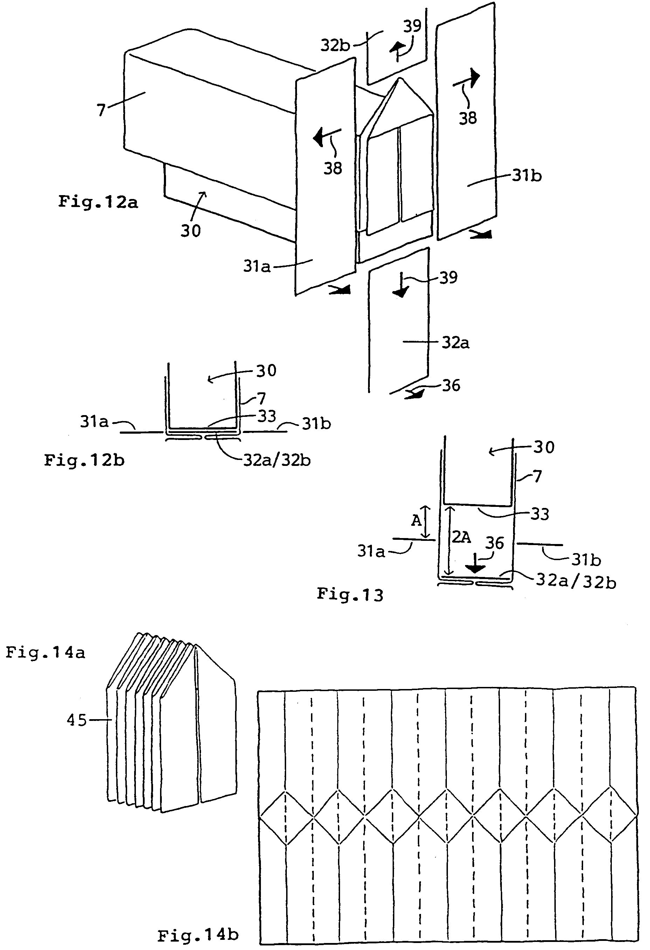

Wie die Figuren 2a und 2b zeigen, sind seitlich neben dem Führungsteil 1 zwei Klemmorgane 15 und 16 angeordnet, die jeweils aus zwei Schiebern 15a und 15b bzw. 16a und 16b bestehen. Diese Klemmorgane 15 und 16 sind im Bereich der Ausnehmung 3 angeordnet und erstrecken sich vertikal zur Kante 2. Die Schieber 15a und 15b des Klemmorgans 15 sind jeweils gemäss Doppelpfeil 12 rechtwinklig zur Führungsfläche 18 bzw. 19 bewegbar und in Richtungen des Doppelpfeils 14 zum Klemmorgan 16 hin und von diesem weg bewegbar. Die Schieber 15a und 15b sind zur Ausführung dieser Bewegungen mit einem hier nicht gezeigten Bewegungsorgan versehen. Dieses Bewegungsorgan kann beispielsweise an sich bekannte pneumatische Zylinder aufweisen, welche die genannten Bewegungen ausführen. Solche Bewegungsorgane sind an sich gut bekannt und brauchen hier deshalb nicht erläutert zu werden. Die Schieber 16a und 16b sind hingegen lediglich in den Richtungen des Doppelpfeils 13 bezüglich der Führungsfläche 18 bzw. 19 rechtwinklig zu diesen Flächen bewegbar. Um die Folie 7 mit Leporello-Faltungen zu versehen, wird diese in Richtung des Pfeiles 9 (Fig. 1) auf das Führungsteil 1 aufgeschoben, bis diese die in den Figuren 2a und 2b gezeigte Lage einnimmt. Das Aufschieben der Folie kann mit einem hier nicht gezeigten Greiforgan oder von Hand erfolgen. Wie insbesondere Fig. 2b zeigt, ist eine vordere Kante 7c der Folie 7 unmittelbar vor dem Klemmorgan 16 angeordnet. Um in der Folie 7 an beiden Hälften 7a und 7b gleichzeitig je eine Faltung zu bilden, wird die Folie 7 mit dem vorderen Klemmorgan 16 entlang der Linie L1 (Fig. 1) durch Klemmung am Führungsteil 1 fixiert. Unmittelbar anschliessend werden die Schieber 15a und 15b gleichzeitig an die Folienhälften 7a bzw. 7b angepresst und in Richtung des Pfeiles 10 gegen das Klemmorgan 16 bewegt. Dadurch wird der zwischen den Klemmorganen 15 und 16 befindliche Bereich der Folie 7 gefaltet. Die erste Faltung ist ausgeführt, sobald die beiden Klemmorgane 15 und 16 gemäss Fig. 3a unter Druck aneinandergelegt sind. In Fig. 3b ist die entstandene Faltung gezeigt. Erkennbar sind zwei parallele und vertikal verlaufende Faltkanten 7d, eine horizontal verlaufende Faltkante 7e sowie vier schräg verlaufende Faltkanten 7f. Die Kanten 7c verlaufen ebenfalls vertikal und sind einander gegenüber angeordnet. Damit die Folie 7 bei dem sich in Richtung des Pfeiles 10 bewegenden Klemmorgan 15 vor diesem gemäss Fig. 2c in der gewünschten Richtung nach aussen bewegt, ist unterhalb der schlitzförmigen Ausnehmung 5 eine Düse 6 angeordnet die aus zeichnerischen Gründen lediglich in Fig. 1 gezeigt ist und die zu Beginn der genannten Bewegung des Klemmorgans 15 einen kurzen Luftstoss gegen die Ausnehmung 5 richtet. Die in die Ausnehmung 5 eingeleitete Luft treibt die Folienhälften 7a und 7b am unteren freien Rand im Bereich der Ausnehmung 5 auseinander, wodurch die anschliessende Falzbildung eingeleitet wird. Die Düse 6 könnte auch durch Finger oder ähnliche Spreizteile ersetzt sein, die von unten zwischen die Folienhälften 7a und 7b eingreifen. Wie ersichtlich werden die Kanten 7d bis 7f durch eine einzige lineare Bewegung des Klemmorgans 15b gebildet. Während dieser Bewegung wird der hinter dem Klemmorgan 15 befindliche Bereich der Folie 7 entsprechend in Richtung des Pfeiles 11 (Fig. 2a) nachgezogen. Nachdem die erste Faltung gebildet ist, wird das Klemmorgan 15 in Richtung des Pfeils 17 wieder in die in Fig. 2a gezeigte Ausgangsstellung zurückbewegt. In Fig. 4a ist die Vorrichtung in einem Zustand nach dem Abschluss einer ersten Faltung gezeigt. Der nun nachfolgende Zyklus zur Bildung einer zweiten Faltung entspricht genau dem oben erwähnten ersten Zyklus. Die Faltungen werden nun wiederholt, bis die Folie 7 über ihre gesamte Länge gefaltet ist. Die Fig. 14a zeigt eine solche vollständig gefaltete Folie, wobei bei einer Schutzauflage allerdings wesentlich mehr Faltungen vorhanden sind. Wird die gefaltete Folie an ihren Enden gefasst und auseinandergezogen, so entfaltet sie sich zu der in Fig. 14b gezeigten Folie.

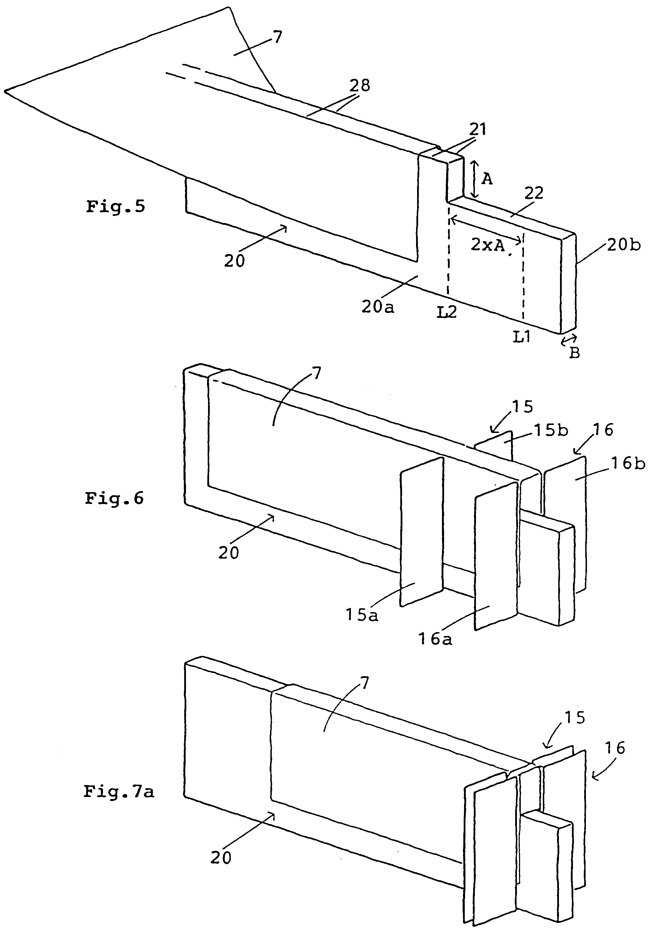

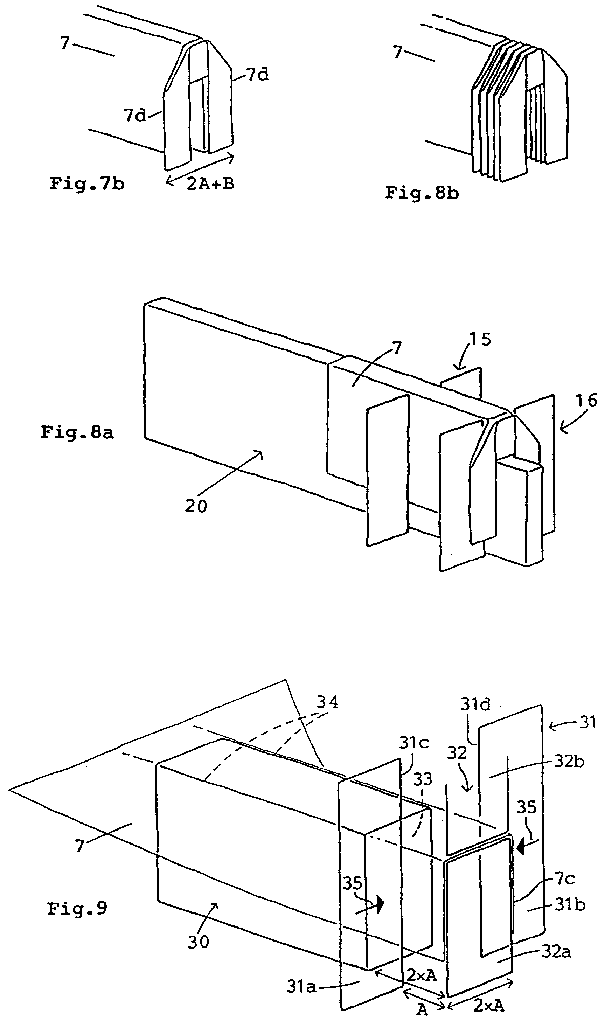

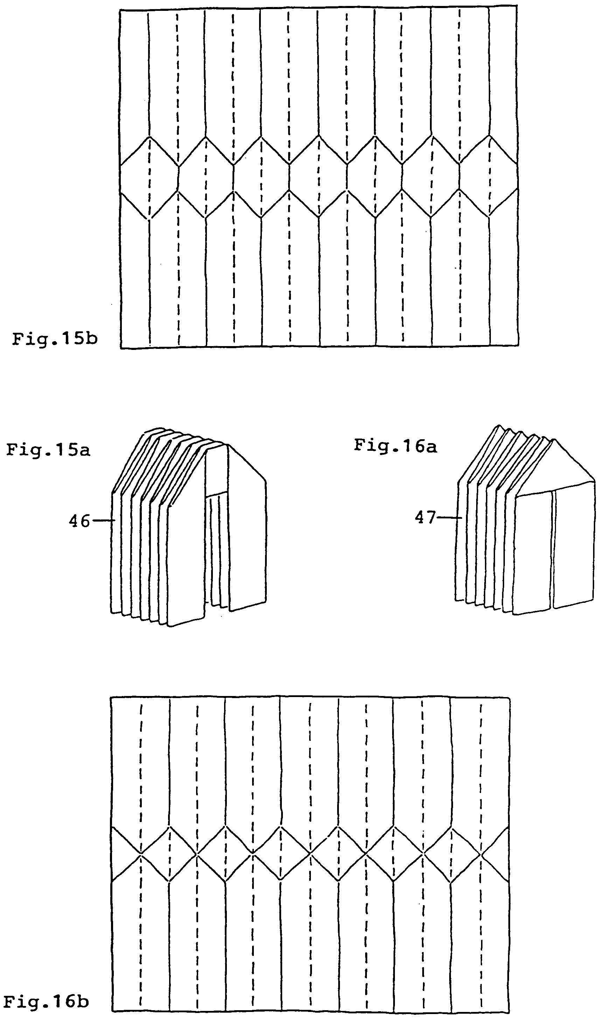

Die Figuren 5 bis 8b zeigen eine Vorrichtung und ein Verfahren nach einer Variante. Von der oben erwähnten Vorrichtung unterscheidet sich diese im wesentlichen dadurch, dass ein Führungsteil 20 vorgesehen ist, bei dem gegenüberliegende Führungsflächen 20a und 20b einen Abstand B zueinander aufweisen. Der Führungsteil 20 weist ebenfalls eine Ausnehmung 22 auf, welche der Ausnehmung 3 entspricht. Die Vorrichtung weist ebenfalls Klemmorgane 15 und 16 auf, die abgesehen von einem entsprechend grösseren Abstand der Schieber 15a und 15b bzw. 16a und 16b die gleichen Bewegungen ausführen wie oben erläutert. Die Folie 7 ist in ihrer Längsrichtung über den Führungsteil 20 gelegt, wobei sich entsprechend zweier Führungskanten 21 in der Folie 7 zwei erste Falten 28 bilden. Die Figuren 6 und 7a zeigen den Ablauf einer ersten Faltung, die auch hier fortlaufend zur Bildung weiterer Faltungen wiederholt wird. In der Fig. 7b ist eine Folie 7 gezeigt, bei der eine erste Faltung gebildet ist. Wie ersichtlich, unterscheidet sich diese Faltung von derjenigen gemäss Fig. 3b dadurch, dass diese in Längsrichtung der Folie gesehen U-förmig ausgebildet ist. Der Abstand der parallelen äusseren Kanten 7d beträgt 2A + B, wobei A die Breite eines Leporellos und B der Abstand der Führungsflächen 20a und 20b zueinander bedeutet. Wie die Fig. 5 zeigt, ist der Abstand der Klemmorgane 15 und 16 zueinander in Ruhestellung gleich 2A. Die Höhe der Ausnehmung 22 beträgt wenigstens A. Durch geeignete Wahl der Abstände A und B ist es bei der erfindungsgemässen Vorrichtung sehr einfach möglich, die Abmessungen der Faltungen zu verändern. Die Fig. 15a zeigt eine mit dieser Vorrichtung gefaltete Auflage 46. Die Fig. 15b zeigt die Schutzauflage 46 im entfalteten Zustand.

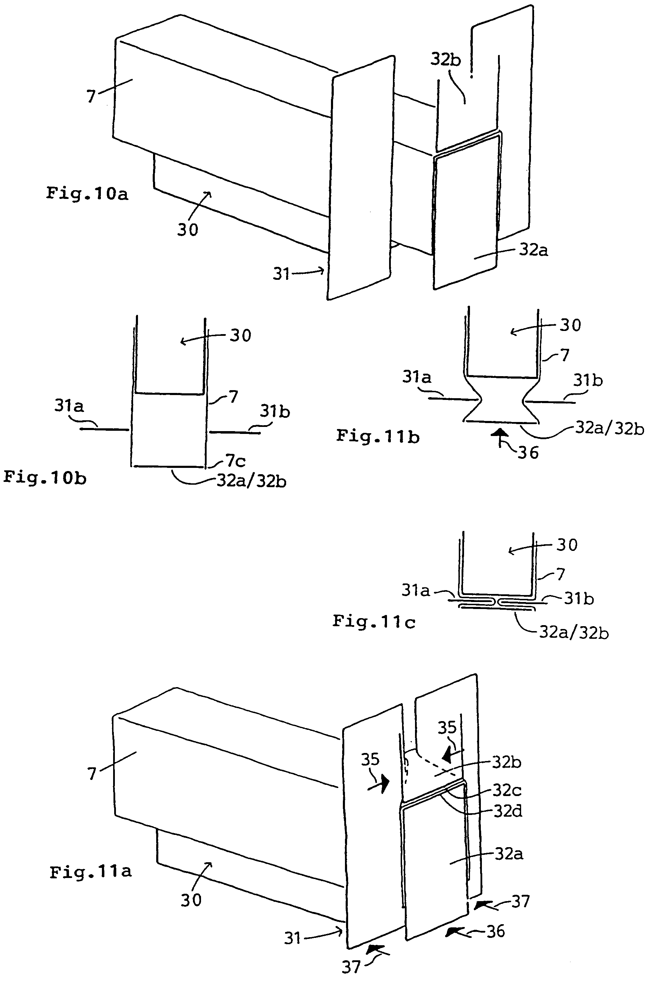

Die Figuren 9 bis 13 illustrieren eine dritte Variante der erfindungsgemässen Vorrichtung. Diese weist ebenfalls einen länglichen Führungsteil 30 sowie zwei Klemmorgane 31 und 32 auf. Die Folie 7 ist bei dieser Vorrichtung gemäss Fig. 9 ebenfalls in Längsrichtung über den Führungsteil 30 gelegt und weist zwei parallele im Abstand zueinander angeordnete erste Falten 34 auf. Ein erstes Klemmorgan 31 weist zwei Schieber 31a und 31b auf, die seitlich neben dem Führungsteil 30, jedoch vor einer frontseitigen Fläche 33 des Führungsteils 30 angeordnet sind. Die Schieber 31a und 31b sind mit einem hier nicht gezeigten Antrieb versehen, mit dem diese Schieber zueinander hin sowie zurück in die Ausgangsposition bewegbar sind. Vordere gerade Kanten 31c und 31d sind hierbei stets parallel zueinander. Das zweite Klemmorgan 32 weist zwei Schieber 32a und 32b auf, die ebenfalls mit einem Antrieb versehen sind und die in Längsrichtung des Führungsteils 30 bewegbar sind. Diese Bewegungen sind in den Figuren 11a, 11b und 13 mit den Pfeilen 36 angedeutet. Die Schieber 32a und 32b sind zusätzlich senkrecht bewegbar (Pfeile 3a in Fig. 12a). Ebenfalls sind die Schieber 31a und 31b in Längsrichtung des Führungsteils 30 verschiebbar. Nachfolgend wird die Bildung einer ersten Faltung anhand der Figuren 9 bis 13 kurz erläutert. Die Fig. 9 zeigt die Ausgangsposition, bei welcher die Folie 7 so auf den Führungsteil 30 aufgeschoben ist, bis die vordere Kante 7c unmittelbar vor den Schiebern 32a und 32b angeordnet ist, wie insbesondere Fig. 10b zeigt. Die beiden Schieber 31a und 31b werden nun in Richtung der Pfeile 35 quer zum Führungsteil 30 bewegt und gleichzeitig werden diese beiden Schieber in Richtung der Pfeile 37 in Längsrichtung des Führungsteils 30 gegen die frontseitige Fläche 33 hin bewegt. Die Figuren 11b und 11c illustrieren diese Bewegungen. Gleichzeitig klemmen die Schieber 32a und 32b die Folie 7 fest und bewegen sich dabei in Längsrichtung des Führungsteils 30 zur Fläche 33 hin. Diese Bewegungen führen schliesslich zu der in den Figuren 11a und 11c gezeigten Anordnung. Die Klemmkanten 31c und 31d, 32c und 32d sind hierbei aneinander angepresst und die Schieber 32a und 32b sind in Längsrichtung des Führungsteils 30 an die beiden Schieber 31a und 31b angelegt. In dieser Position ist eine erste Faltung der Folie 7 gebildet. Nun werden die beiden Schieber 31a und 31b in Richtung der Pfeile 38 auseinander bewegt und die Schieber 32a und 32b werden gemäss Fig. 12a nach unten bzw. nach oben in Richtung der Pfeile 39 aus der gebildeten Faltung herausgezogen. Die Folie 7 wird nun entlang des Führungsteils 30 weitergeschoben. Die neu gebildete Faltung entfernt sich dabei von der frontseitigen Fläche 33. Um die Ausgangsstellung für die zweite Faltung zu erhalten, werden die Schieber 32a und 32b in Gegenrichtung der Pfeile 39 nach oben, bzw. nach unten, hinter die gebildete Faltung geschoben. Die Schieber 32a und 32b befinden sich somit unmittelbar vor der Fläche 33 (Fig. 12b). Nun werden die Schieber 32a und 32b von der Fläche 33 um die Länge 2A wegbewegt und gleichzeitig werden die Schieber 31a und 31b um die Länge A ebenfalls von der Fläche 33 wegbewegt. Die vier Schieber haben nun die in Fig. 9 gezeigte Ausgangsposition wieder eingenommen. Wie die Fig. 13 zeigt, befindet sich nun die erste Faltung vor den Schiebern 32a und 32b und die beiden Schieber 31a und 31b sind zwischen dem Schieber 32a und der Fläche 33 angeordnet. Zur Bildung der zweiten Faltung werden die oben erwähnten Bewegungen wiederholt. Die Folie 7 wird nun mit entsprechend wiederholten Zyklen gefaltet bis die in Fig. 16a gezeigte gefaltete Folie 47 vorliegt. Die entfaltete Folie 47 ist in der Fig. 16b gezeigt. Bei einem Vergleich der Figuren 14a, 15a und 16a zeigt sich sofort, dass die Vorderansicht der ersten Faltung bei allen drei Ausführungen unterschiedlich ist. Mit der erfindungsgemässen Vorrichtung sind somit mehrere unterschiedliche Faltungsarten möglich. Fig. 14a und 14b zeigen eine ähnliche Faltung. Hier variiert nur die Reihenfolge der Falten. Auf die in den Figuren 14a, 15a und 16a gezeigten Folien 45 bis 47 wird in der Regel eine Umhüllung angebracht, wozu eine weitere geeignete Vorrichtung dienen kann. Diese Umhüllungen können jedoch auch von Hand aufgebracht werden.

## Patentansprüche

1. Vorrichtung zum Herstellen einer Schutzauflage für Klosettsitze, die ein Führungsteil (1,20,30) mit wenigstens einer Kante (2,21,34) aufweist, über welcher eine Folie (7) in ihrer Längsrichtung zu falten ist, wobei seitlich am Führungsteil (1,20,30) Klemmorgane (15,16,31,32) angeordnet sind, mit denen die Folie (7) auf beiden Seiten des Führungsteils (1,20,30) fassbar und zur Bildung je eines Faltes an jeder Seite des Führungsteils (1,20,30) in Längsrichtung des Führungsteils oder quer zu diesem verschiebbar ist.

2. Vorrichtung nach Anspruch 1, dadurch gekennzeichnet, dass zwei im Abstand zueinander angeordnete Klemmorgane (15,16) vorgesehen sind, wobei ein frontseitig angeordnetes erstes Klemmorgan (16) bezüglich des Führungsteils (1) quer zu diesem und das andere zweite Klemmorgan (15) quer zum Führungsteil (1) und in Längsrichtung des Führungsteils (1) bewegbar ist.

3. Vorrichtung nach Anspruch 1 oder 2, dadurch gekennzeichnet, dass die Klemmorgane (15,16) je zwei Schieber (15a,15b;16a,16b) aufweisen, die jeweils eine vordere Klemmkante (15c,16c) aufweisen.

4. Vorrichtung nach einem der Ansprüche 1 bis 3, dadurch gekennzeichnet, dass das Führungsteil (1,20) im Bereich des frontseitigen Klemmorgans eine Ausnehmung (3,22) für die Aufnahme einer Querfaltung (7e) aufweist.

5. Vorrichtung nach einem der Ansprüche 1 bis 4, dadurch gekennzeichnet, dass zwischen den Klemmorganen (15,16) Mittel (6,5) vorgesehen sind, mit denen die Folie (7) beim Falten vom Führungsteil (1,20) wegbewegbar ist.

6. Vorrichtung nach Anspruch 5, dadurch gekennzeichnet, dass die Mittel (5,6) eine Blasvorrichtung (6) aufweisen, mit welcher während einer Faltung Luft gegen die offene Seite der Folie (7) leitbar ist, oder dass die Mittel (5,6) bewegbare Spreizteile, wie beispielsweise Flügel oder Finger sind, mit welchen die Folie (7) zwischen den Klemmorganen spreizbar ist.

7. Vorrichtung nach Anspruch 5 oder 6, dadurch gekennzeichnet, dass das Führungsteil (1,20) eine Ausnehmung aufweist, die zwischen den Klemmorganen (15,16) angeordnet ist, und gegen welche die Blasvorrichtung (6) gerichtet ist.

8. Vorrichtung nach einem der Ansprüche 1 bis 7, dadurch gekennzeichnet, dass das Führungsteil (2) im Abstand zueinander angeordnete parallele Kanten (21,34) aufweist, über welche die Folie (7) zu falten ist.

9. Vorrichtung nach einem der Ansprüche 1 bis 3, dadurch gekennzeichnet, dass ein Klemmorgan (31) vor einer Frontseite (33) des Führungsteils (30) angeordnet ist und dass im Abstand zu dieser Frontseite (33) ein weiteres Klemmorgan (32) angeordnet ist, das gegen diese Frontseite (33) bewegbar ist.

10. Vorrichtung nach Anspruch 9, dadurch gekennzeichnet, dass das weitere Klemmorgan (32) zwei Schieber (32a,32b) aufweist, der zur Frontseite (33) hin bewegbar und quer nach unten von dieser Frontseite (33) wegbewegbar sind.

## Claims

1. Device for producing a protective layer for toilet seats, wherein
said device exhibits a guide element (1, 20, 30) with at least one edge (2, 21, 34), by way of which a sheet (7) is to be folded in its longitudinal direction; wherein clamping elements (15, 16, 31, 32) are arranged on the side of the guide element (1, 20, 30); and wherein the sheet (7) can be grasped on both sides of the guide element (1, 20, 30) with said clamping elements and can be slid in the longitudinal direction of the guide element or at right angles thereto in order to form a fold on each side of the guide element (1, 20, 30).

2. Device, as claimed in claim 1, wherein
there are two clamping elements (15, 16) that are spaced apart, whereby a front-sided clamping element (16) can be moved in relation to the guide element (1) at right angles thereto and the other clamping element can be moved at right angles to the guide element (1) and in the longitudinal direction of the guide element (1).

3. Device, as claimed in claim 1 or 2, wherein
the clamping elements (15, 16) exhibit two sliders (15a, 15b, 16a, 16b), each of which exhibits a front clamping edge (15c, 16c).

4. Device, as claimed in any one of the claims 1 to 3, wherein
the guide element (1, 20) exhibits in the region of the front-sided clamping element a recess (3, 22) for receiving a cross fold (7e).

5. Device, as claimed in any one of the claims 1 to 4, wherein
between the clamping elements (15, 16) there are means (6, 5), with which the sheet (7) can be moved away from the guide element (1, 20) during the folding operation.

6. Device, as claimed in claim 5, wherein
the means (5, 6) exhibit a blowing device (6), with which air can be guided against the open side of the sheet (7) during a folding operation; or wherein the means (5, 6) are spreading elements, such as wings or fingers, with which the sheet (7) can be spread between the clamping elements.

7. Device, as claimed in claim 5 or 6, wherein
the guide element (1, 20) exhibits a recess, which is arranged between the clamping elments (15, 16) and against which the blowing device (6) is directed.

8. Device, as claimed in any one of the claims 1 to 7, wherein
the guide element (2) exhibits parallel edges (21, 34), which are spaced apart and over which the sheet (7) is to be folded.

9. Device, as claimed in any one of the claims 1 to 3, wherein
a clamping element (31) is disposed in front of a front side (33) of the guide element (30); and wherein another clamping element (32) that can be moved against this front side is arranged at a distance from this front side (33).

10. Device, as claimed in claim 9, wherein
the other clamping element (32) exhibits two sliders (32a, 32b), which can be moved toward the front side (33) and at right angles toward the bottom away from this front side (33).

## Revendications

1. Dispositif pour fabriquer un revêtement de protection pour des sièges de W.C., qui comporte un élément de guidage (1,20,30) comportant au moins un bord (2,21,34), par-dessus lequel une feuille (7) doit être repliée dans sa direction longitudinale, et dans lequel sont disposés latéralement, sur l'élément de guidage (1,20,30), des organes de serrage (15,16,31,32), avec lesquels la feuille (7) peut être saisie des deux côtés de l'élément de guidage (1,20,30) et peut être déplacée dans la direction longitudinale de l'élément de guidage transversalement par rapport à ce dernier pour la formation d'un pli respectif de chaque côté de l'élément de guidage (1,20,30).

2. Dispositif selon la revendication 1, caractérisé en ce qu'il est prévu deux organes de serrage (15,16), disposés à distance réciproque, un premier organe de serrage (16) disposé frontalement étant déplaçable transversalement par rapport à l'élément de guidage (1) tandis que l'autre organe de serrage (15) est déplaçable transversalement par rapport à l'élément de guidage (1) et dans la direction longitudinale de l'élément de guidage (1).

3. Dispositif selon la revendication 1 ou 2, caractérisé en ce que les organes de serrage (15,16) comportent respectivement deux poussoirs (15a,15b;16a,16b), qui possèdent chacun un bord de serrage avant (15c,16c).

4. Dispositif selon l'une des revendications 1 à 3, caractérisé en ce que l'élément de guidage (1,20) possède, dans la zone au niveau de l'organe de serrage avant, un évidement (3,22) servant à recevoir un pli transversal (7e).

5. Dispositif selon l'une des revendications 1 à 4, caractérisé en ce qu'entre les organes de serrage (15,16) sont prévus des moyens (6,5) à l'aide desquels la feuille (7) peut être écartée de l'élément de guidage (1,20), lors du pliage.

6. Dispositif selon la revendication 5, caractérisé en ce que les moyens (5,6) possèdent un dispositif de soufflage (6), au moyen duquel de l'air peut être dirigé contre la face ouverte de la feuille (7), pendant un pliage, ou que les moyens (5,6) sont des pièces d'écartement déplaçables, comme par exemple des ailes ou des doigts, au moyen desquels la feuille (7) peut être ouverte entre les organes de serrage.

7. Dispositif selon la revendication 5 ou 6, caractérisé en ce que l'élément de guidage (1,20) comporte un évidement, qui est situé entre les organes de serrage (15,16) et vers lequel est dirigé le dispositif de soufflage (6).

8. Dispositif selon l'une des revendications 1 à 7, caractérisé en ce que l'élément de guidage (2) possède des bords parallèles (21,34) situés à distance réciproque et sur lesquels la feuille (7) doit être repliée.

9. Dispositif selon l'une des revendications 1 à 3, caractérisé en ce qu'un organe de serrage (31) est disposé en avant d'une face avant (33) de l'élément de guidage (30), et qu'à distance de ce côté avant (33), est disposé un autre organe de serrage (32), qui est déplaçable en direction de cette face avant (33).

10. Dispositif selon la revendication 9, caractérisé en ce que l'autre organe de serrage (32) possède deux poussoirs (32a,32b), qui sont déplaçables en direction de la face avant (33) et peuvent être écartés transversalement et vers le bas à partir de cette face avant (33).
